# FASCICULE DE BREVET EUROPEEN

(11) **EP 0 421 862 B1**
(45) Date de publication et mention de la délivrance du brevet: **27.10.1993**
(21) Numéro de dépôt: 90402712.5
(22) Date de dépôt: 01.10.1990
(51) Int. Cl.: F16G 11/12, E04G 21/12

(54) **Perfectionnements aux procédés et dispositifs pour mettre sous tension des câbles à brins multiples**
Verfahren und Vorrichtungen zum Spannen von mehrlitzigen Kabeln
Methods and means for tensioning multiple strand cables

(30) Priorité: 05.10.1989 FR 8913020
(43) Date de publication de la demande: 10.04.1991
(73) Titulaire: FREYSSINET INTERNATIONAL (STUP), F-92100 Boulogne-Billancourt (FR)
(72) Inventeur: Percheron, Jean-Claude, F-95510 Vienne en Arthies (FR); Stouffs, André, B-1040 Bruxelles (BE)
(74) Mandataire: Behaghel, Pierre

(56) Documents cités:
- FR-A- 1 570 732
- US-A- 3 207 829
- US-A- 4 805 877

## Description

L'invention est relative aux procédés et dispositifs pour mettre sous tension des câbles à brins ou torons multiples tels que ceux constituant les haubans qui servent à supporter des tabliers de ponts ou à stabiliser des tours de grande hauteur US-A-3207 829.

Lors de la mise sous tension d'un tel câble, laquelle est effectuée pour ancrer la seconde extrémité de ce câble sur un bloc approprié, après ancrage de sa première extrémité sur un autre bloc, il convient de donner des valeurs identiques aux tensions des différents brins ou torons constitutifs du câble, lesquels sont identiques entre eux, afin que tous ces brins participent uniformément à l'effort de traction du câble.

Un tel résultat peut être obtenu en exerçant la tension d'ancrage sur l'ensemble du câble, c'est-à-dire simultanément sur la totalité des brins montés en parallèle.

Mais il faut alors recourir à un vérin de tension particulièrement lourd et encombrant, ce qui peut constituer un inconvénient majeur, en particulier pour les applications où la tête de câble à ancrer est difficile d'accès.

Pour remédier à cet inconvénient, il a déjà été proposé de tendre les brins un à un à l'aide d'un petit vérin individuel.

Mais il est alors difficile d'obtenir des valeurs identiques pour les tensions appliquées successivement sur les différents brins, car la mise sous tension de chaque brin soulage légèrement les brins préalablement tendus, ce qui modifie à n'en plus finir les valeurs des tensions des différents brins au cours de la mise sous tension complète du câble.

Les formules qui ont été proposées jusqu'à ce jour pour remédier à cet inconvénient n'ont pas donné satisfaction, se traduisant notamment par des calculs très difficiles ou par des suites d'opérations particulièrement délicates à effectuer.

L'invention a pour but, surtout, de remédier très simplement à l'inconvénient signalé.

A cet effet, le procédé de mise sous tension d'un câble à brins multiples selon l'invention met encore en oeuvre une mise sous tension successive des différents brins à l'aide d'un vérin individuel et il est essentiellement caractérisé par la suite des opérations suivantes : on met sous tension un premier brin du câble, appelé "brin témoin" ci-après, tout en rendant possible ensuite la mesure de la tension de ce brin à chaque instant, puis on tire un second brin jusqu'à ce que sa tension soit égale à celle du brin témoin, mesurée au même instant, et on ancre alors ce second brin ainsi tendu, puis on tire un troisième brin jusqu'à ce que sa tension soit égale à celle du brin témoin mesurée à l'instant correspondant et on ancre alors ce troisième brin ainsi tendu, et ainsi de suite jusqu'à l'ancrage du dernier brin, après quoi on note la tension alors appliquée sur le brin témoin et, après avoir détendu ce dernier et l'avoir libéré des moyens de mesure, on ancre ce brin témoin en appliquant sur lui la tension ainsi notée.

Pour ce qui est des dispositifs pour mettre en oeuvre le procédé de mise sous tension ci-dessus défini, ils sont essentiellement caractérisés selon l'invention en ce qu'ils comprennent un vérin individuel pour mettre sous tension successivement chacun des brins du câble considéré, des moyens pour mesurer la tension du brin témoin à tout instant après sa première mise sous tension, des moyens adaptables successivement sur chacun des brins autres que le brin témoin au cours de sa mise sous tension et propres à mesurer la tension alors appliquée sur ce brin, des moyens pour comparer la tension ainsi mesurée à celle du brin témoin au même instant, et des moyens pour arrêter automatiquement la montée en tension du brin considéré lorsque cette comparaison révèle l'égalité entre les deux tensions comparées.

Dans des modes de réalisation préférés, on a recours en outre à l'une et/ou à l'autre des dispositions suivantes :
- les moyens pour mesurer la tension appliquée sur le brin témoin sont constitués par une première cellule dynamométrique entourant ce brin et les moyens pour mesurer successivement la tension appliquée sur chacun des autres brins sont constitués par une seconde cellule dynamométrique identique à la première,
- le bloc d'ancrage des différents brins du câble comprend une pluralité de trous tronconiques propres à recevoir respectivement des mors tronconiques d'ancrage associés aux différents brins et il est prévu autour du brin témoin, au niveau dudit bloc, un faux mors tronconique logé dans le trou tronconique correspondant et traversé librement par ledit brin témoin, ce faux mors servant de support successivement à la cellule dynamométrique qui entoure le brin témoin et à un mors d'ancrage dudit brin témoin, lui-même monté sur ladite cellule,
- le bloc d'ancrage perforé selon l'alinéa précédent est associé à une plaque disposée à une petite distance de ce bloc, plaque perforée, d'une part, par un alésage de relativement grand diamètre propre à recevoir et guider la tête du faux mors et, d'autre part, par une pluralité d'alésages cylindriques traversés avec un léger jeu par les différents brins autres que le brin témoin.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant à la planche de dessins ci-annexée d'une manière bien entendu non limitative.

La figure 1, de ce dessin, montre schématiquement un dispositif de mise sous tension de câble à brins multiples établi selon 1 invention.

Les figures 2 et 3 montrent un tel dispositif respectivement en coupe axiale selon II-II figure 3 et en coupe transversale selon III-III figure 2, portions enlevées.

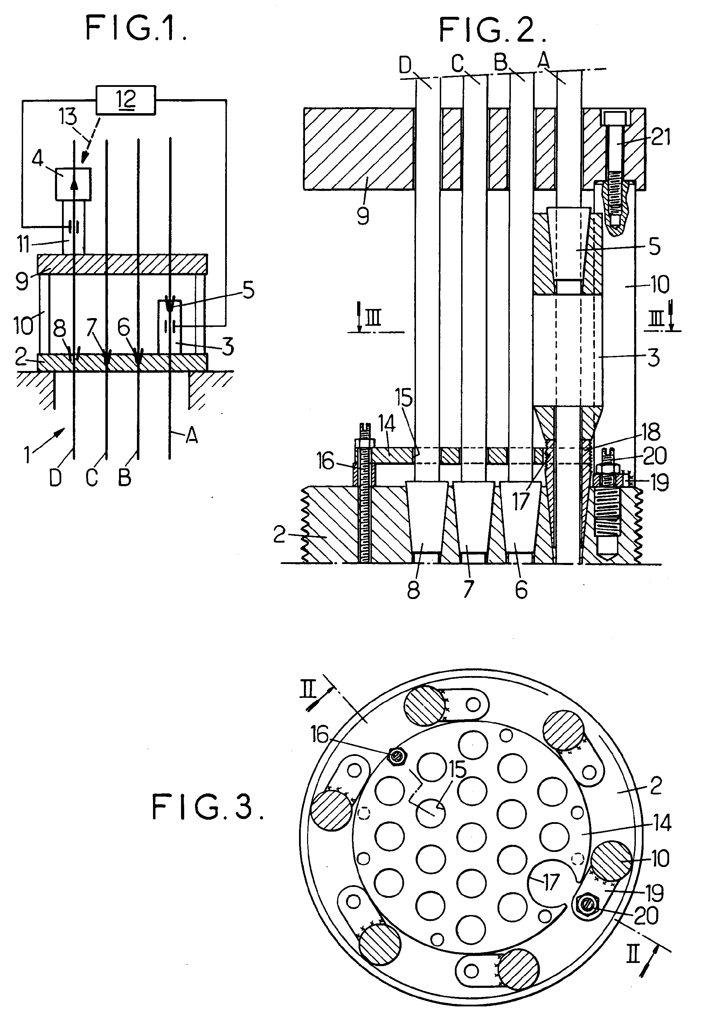

On se propose de mettre sous tension un câble ou hauban 1 composé d'une pluralité de brins ou torons parallèles identiques qui, sur la figure 1, sont supposés être au nombre de 4 et sont désignés par les références A, B, C et D, le nombre en question étant en réalité très supérieur et pouvant atteindre 100, 200 ou même davantage.

Plus précisément, on suppose qu'une première extrémité de chacun de ces brins, non visible sur le dessin, est déjà ancrée dans un massif ou bloc approprié et l'on désire ancrer l'autre extrémité de chaque brin sur un bloc 2 qui est traversé par cette autre extrémité, tout en appliquant une tension identique sur chacun desdits brins.

On commence par monter autour d'un tronçon de l'un des brins considérés, supposé être ici le brin A, une cellule dynamométrique 3 permettant de connaître à tout instant la tension appliquée sur ledit tronçon.

Puis à l'aide d'un relativement petit vérin 4, on met sous tension ledit brin A, y compris son tronçon ci-dessus, et on ancre ce brin A sur le bloc 2 lorsque sa tension a a atteint une valeur prédéterminée a₁ (ce paramètre a₁ désignant la tension a du brin A au temps t₁), par exemple à l'aide d'un mors tronconique 5 monté sur la cellule 3, laquelle prend elle-même appui sur le bloc 2.

On met ensuite sous tension le brin suivant B à l'aide du vérin A jusqu'à ce que sa tension b atteigne une valeur égale à celle appliquée au même instant sur le brin A.

Cette égalité est atteinte à un instant t₂ auquel la valeur a₂ de la tension appliquée sur le brin A est un peu inférieure à sa tension initiale a₁, vu que l'exercice d'une tension sur le second brin B a pour effet de racourcir légèrement le brin A et donc de réduire légèrement sa tension.

On appellera b₂ la tension alors appliquée sur le brin B au temps t₂, cette valeur b₂ étant alors égale à a₂.

On ancre alors sur le bloc 2 le second brin B tendu à ladite tension b₂.

On met ensuite sous tension le brin suivant C, à l'aide du vérin 4 précédent, jusqu'à ce que sa tension c atteigne une valeur égale à celle appliquée au même instant sur le brin A.

Cette égalité est atteinte à un instant t₃ auquel la valeur a₃ de la tension appliquée sur le brin A, valeur égale à la tension c₃ alors appliquée sur le brin C, est un peu inférieure aux deux précédentes a₁ et a₂.

Ce qui est remarquable, c'est que ladite tension a₃ est alors rigoureusement égale à celle b₃ appliquée au même instant sur le second brin B du fait que, lors de la mise sous tension du troisième brin C, les deux premiers brins A et B peuvent être considérés comme étant montés en parallèle avec des tensions qui varient légèrement mais demeurent rigoureusement identiques entre elles dans le temps.

A l'instant t₃ indiqué ci-dessus, on a donc une parfaite égalité entre les trois tensions a₃, b₃ et c₃.

On ancre alors le brin C tendu à la tension c₃ indiquée.

On procède ensuite de la même façon avec le brin suivant D en utilisant encore le vérin 4 précédent jusqu'à égalisation de la tension d appliquée sur ce quatrième brin avec celle alors appliquée sur le brin A.

Lorsque cette égalisation est obtenue au temps t₄, la tension d₄ appliquée sur le brin D est égale non seulement à celle a₄ alors appliquée sur le brin A, mais aussi à celles b₄ et c₄ appliquée au même instant sur les deux autres brins B et C, vu que, lors de la mise sous tension du brin D, les trois autres brins A, B et C étaient montés en parallèle avec des tensions respectives variant légèrement, mais demeurant identiques entre elles dans le temps.

C'est ce stade de la procédure de mise sous tension qui est schématisé sur la figure 1.

Sur cette figure, les mors d'ancrage 6,7 sont montrés serrés contre les deux brins B et C et assurent les ancrages respectifs de ces brins sur le bloc 2 alors que le mors d'ancrage 8 affecté au brin D est encore en son état desserré et donc non ancré.

Après ancrage des différents brins B, C et D sur le bloc 2, on note la valeur de la tension qui est alors affichée sur la cellule 3, concernant le premier brin A, valeur qui est alors égale à a₄, on détend ce brin A pour dégager la cellule 3 et on ancre ledit brin A sur le bloc 2 après avoir appliqué sur celui-ci une tension égale à a₄.

La mise sous tension du câble 1 est alors terminée avec une égalisation des tensions dans chacun de ses brins constitutifs A, B, C et D.

Bien entendu, le raisonnement présenté pour la mise sous tension des trois brins B, C et D ci-dessus peut être généralisé à la mise sous tension d'un nombre quelconque de brins autres que le brin A, la mise sous tension de chaque nouveau brin étant chaque fois effectuée avec le même vérin 4 et jusqu'à égalisation de sa tension avec celle du brin A au même instant, la tension alors obtenue étant celle appliquée à chacun des brins préalablement tendus.

Sur la figure 1, on voit que le vérin 4 n'est pas appliqué directement sur le bloc 2 mais sur une plaque 9 traversée par les têtes des différents brins et maintenue à une distance convenable du bloc 2 par des colonnes 10.

En outre ce vérin 4 n'est pas appliqué directement contre la plaque 9, mais par l'intermédiaire d'une cellule dynamométrique 11 qui est avantageusement identique à la cellule 3 et qui entoure le brin concerné.

On voit également sur cette figure en 12 un circuit comparateur recevant les indications de tension qui proviennent respectivement des deux cellules 3 et 11 et la flèche 13 symbolise la commande qui est élaborée par ce comparateur 12 lorsqu'il y a identité entre les deux tensions mesurées respectivement par les deux cellules 3 et 11, cette commande pouvant être l'arrêt d'un pompage de montée en tension exercé au niveau du vérin 4.

Sur les figures 2 et 3 on retrouve les différents éléments affectés ci-dessus des références 1 à 3 et 5 à 10.

En outre, ces figures 2 et 3 font apparaître les quelques particularités suivantes.

Une plaquette 14 perforée par des lumières 15 traversées avec un faible jeu par les brins B, C, D... est montée sur des colonnettes 16 à une petite distance de la face extérieure du bloc 2.

Cette plaquette 14 a pour mission de maintenir axialement les mors 6, 7, 8... à proximité de leurs positions d'ancrage même lors de l'exercice des tractions d'ancrage sur les têtes des brins correspondants.

Au droit du brin témoin A, ladite plaquette 14 est perforée par un trou 17 de plus grand diamètre que les lumières 15.

Ce trou 17 est destiné à recevoir et guider un "faux mors" 18, c'est-à-dire une pièce tubulaire continue présentant une surface tronconique extérieure complémentaire de la face intérieure du logement tronconique correspondant du bloc 2 et un alésage cylindrique intérieur réservant un libre passage pour le brin A.

Ce faux mors 18 sert d'entretoise axiale pour supporter la cellule 3 elle-même surmontée du mors 5 et pour transmettre au bloc 2 les efforts de traction exercés par le brin A sur ce mors 5.

On voit également sur les figures 2 et 3 que les colonnes 10 sont fixées :
- d'une part, sur le bloc 2 par des pattes 19 soudées sur les bases de ces colonnes et elles-mêmes fixées sur le bloc 2 par des goujons spéciaux 20,
- et d'autre part, sur la plaque 9 par des boulons 21 vissés axialement en bout sur lesdites colonnes.

En suite de quoi et quel que soit le mode de réalisation adopté, on dispose d'un mode de mise sous tension individuelle des brins multiples d'un câble qui présente de nombreux avantages par rapport à ceux antérieurement connus, en particulier en ce qu'il rend possible la mise sous tension desdits brins avec application de tensions identiques sur ceux-ci moyennant le recours à des dispositifs relativement simples et peu nombreux.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Procédé pour mettre sous tension un câble à brins multiples (A, B, C, D...) mettant en oeuvre une mise sous tension successive des différents brins à l'aide d'un vérin individuel, caractérisé par la suite des opérations suivantes : on met sous tension un premier brin (A) du câble, appelé "brin témoin" ci-après, tout en rendant possible ensuite la mesure de la tension de ce brin à chaque instant, puis on tire un second brin (B) jusqu'à ce que sa tension soit égale à celle du brin témoin, mesurée au même instant, et on ancre alors ce second brin ainsi tendu, puis on tire un troisième brin (C) jusqu'à ce que sa tension soit égale à celle du brin témoin mesurée à l'instant correspondant et on ancre alors ce troisième brin ainsi tendu, et ainsi de suite jusqu'à l'ancrage du dernier brin (D), après quoi on note la tension alors appliquée sur le brin témoin (A) et, après avoir détendu ce dernier et l'avoir libéré des moyens de mesure, on ancre ce brin témoin en appliquant sur lui la tension ainsi notée.

2. Dispositif pour mettre en oeuvre le procédé de mise sous tension selon la revendication 1, caractérisé en ce qu'il comprend un vérin individuel (4) pour mettre sous tension successivement chacun des brins (A, B, C, D) du câble considéré, des moyens pour mesurer la tension du brin témoin (A) à tout instant après sa première mise sous tension, des moyens (11) adaptables successivement sur chacun des brins (B, C, D...) autres que le brin témoin au cours de sa mise sous tension et propres à mesurer la tension alors appliquée sur ce brin, des moyens (12) pour comparer la tension ainsi mesurée à celle du brin témoin au même instant, et des moyens (13) pour arrêter automatiquement la montée en tension du brin considéré (B, C, D...) lorsque cette comparaison révèle l'égalité entre les deux tensions comparées.

3. Dispositif selon la revendication 2, caractérisé en ce que les moyens pour mesurer la tension appliquée sur le brin témoin (A) sont constitués par une première cellule dynamométrique (3) entourant ce brin et en ce que les moyens pour mesurer successivement la tension appliquée sur chacun des autres brins sont constitués par une seconde cellule dynamométrique (11) identique à la première.

4. Dispositif selon la revendication 3, caractérisé en ce qu'un bloc d'ancrage (2) des différents brins du câble comprend une pluralité de trous tronconiques propres à recevoir respectivement des mors tronconiques d'ancrage (6,7,8) associés aux différents brins et en ce qu'il est prévu autour du brin témoin (A), au niveau dudit bloc, un faux mors tronconique (18) logé dans le trou tronconique correspondant et traversé librement par ledit brin témoin, ce faux mors servant de support successivement à la cellule dynamométrique (3) qui entoure le brin témoin et à un mors d'ancrage (5) dudit brin témoin, lui-même monté sur ladite cellule,

5. Dispositif selon la revendication 4, caractérisé en ce que ledit bloc d'ancrage (2) est associé à une plaque (14) disposée à une petite distance de ce bloc, plaque perforée, d'une part, par un alésage de relativement grand diamètre (17) propre à recevoir et guider la tête du faux mors (18) et, d'autre part, par une pluralité d'alésages cylindriques (15) traversés avec un léger jeu par les différents brins autres que le brin témoin.

## Patentansprüche

1. Verfahren zum Spannen eines Kabels mit mehreren Litzen (A,B,C,D...) unter Durchführung eines aufeinanderfolgenden Spannens der verschiedenen Litzen mit Hilfe einer einzelnen Zieheinrichtung,
**gekennzeichnet durch**
die Aufeinanderfolge der folgenden Schritte:
eine erste im folgenden "Bezugslitze" genannte Litze (A) des Kabels wird gespannt, wobei anschließend die Messung der Spannung dieser Litze zu jedem Zeitpunkt möglich gemacht wird, danach wird eine zweite Litze (B) solange gezogen, bis ihre Spannung ebenso groß ist wie die im gleichen Zeitpunkt gemessene der Bezugslitze, dann wird diese derart gespannte zweite Litze verankert, danach wird eine dritte Litze (C) solange gezogen, bis ihre Spannung ebenso groß ist wie die im entsprechenden Zeitpunkt gemessene Spannung der Bezugslitze, dann wird diese derart gespannte dritte Litze verankert, wobei in dieser Weise bis zur Verankerung der letzten Litze (D) fortgefahren wird, wonach die dann auf die Bezugslitze (A) wirkende Spannung festgestellt wird und nachdem diese letztere entspannt worden ist und von Meßmitteln befreit worden ist, wird diese Bezugslitze unter Anlegen der derart festgestellten Spannung verankert.

2. Vorrichtung zum Durchführen des Spannverfahrens nach Anspruch 1, **dadurch gekennzeichnet,** daß sie umfaßt eine einzelne Zieheinrichtung (4) zum aufeinanderfolgenden Spannen jeder der Litzen (A,B,C,D) des betrachteten Kabels Mittel zum Messen der Spannung der Bezugslitze (A) in jedem Zeitpunkt nach derem ersten Spannen, Mittel (11), welche aufeinanderfolgend an jede der Litzen (B,C,D...) mit Ausnahme der Bezugslitze während ihres Spannens anpaßbar sind und geeignet sind, die derart auf diese Litze angelegte Spannung zu messen, Mittel (12) zum Vergleichen der derart gemessenen Spannung mit derjenigen der Bezugslitze im gleichen Zeitpunkt und Mittel (13) zum automatischen Stoppen der Spannungszunahme der betrachteten Litze (B,C,D,...), wenn dieser Vergleich ergibt, daß die zwei verglichenen Spannungen gleich sind.

3. Vorrichtung nach Anspruch 2, **dadurch gekennzeichnet,** daß die Mittel zum Messen der auf die Bezugslitze (A) angelegten Spannung von einer diese Litze umgebenden, ersten dynamometrischen Zelle (3) gebildet sind und daß die Mittel zum aufeinanderfolgenden Messen der auf jede der anderen Litzen angelegten Spannung von einer zweiten dynamometrischen Zelle (11) gebildet sind, welche mit der ersten identisch ist.

4. Vorrichtung nach Anspruch 3, **dadurch gekennzeichnet,** daß ein Verankerungsblock (2) für die verschiedenen Litzen des Kabels eine Mehrzahl von kegelstumpfförmigen Löchern aufweist, welche geeignet sind, jeweils den verschiedenen Litzen zugeordnete, kegelstumpfförmige Verankerungsbacken (6,7,8) aufzunehmen, und daß in Höhe des Blocks um die Bezugslitze (A) herum ein kegelstumpfförmiger Scheinbacken (18) vorgesehen ist, der in dem entsprechenden kegelstumpfförmigen Loch angeordnet ist und von der Bezugslitze frei durchsetzt wird, wobei dieser Scheinbacken aufeinanderfolgend als Halt der die Bezugslitze umgebenden dynamometrischen Zelle (3) und eines Verankerungsbackens (5) der Bezugslitze dient, welcher selbst auf der Zelle angebracht ist.

5. Vorrichtung nach Anspruch 4, **dadurch gekennzeichnet,** daß der Verankerungsblock (2) einer in einem kleinen Abstand von diesem Block angeordneten Platte (14) zugeordnet ist, welche Platte einerseits von einer zum Aufnehmen und Führen des Kopfs des Scheinbackens (18) geeigneten Bohrung mit relativ großem Durchmesser (17) perforiert ist und andererseits von einer Mehrzahl von zylindrischen Bohrungen (15), durch welche mit Ausnahme der Bezugslitze die verschiedenen Litzen mit kleinem Spiel hindurchgehen.

## Claims

1. Method for placing under tension a multiplestrand cable (A,B,C,D...) employing successive tensioning of the different strands by means of an individual jack, characterized by the sequence of the following operations: placing under tension a first strand (A) of the cable called "control strand" below, whilst rendering possible then the measurement of the tension of this strand at any moment, then tightening a second strand (B) until its tension is equal to that of the control strand, measured at the same moment, and then anchoring this second strand so tightened, then tightening a third strand (C) until its tension is equal to that of the control strand measured at the corresponding moment, and then anchoring this third strand thus tightened, and so on until the anchoring of the last strand (D), after which the tension then applied to the control strand (A) is noted and, after having relaxed the latter and having released from it the measuring means, this control strand is anchored by applying to it the tension thus noted.

2. Device for employing the method of tensioning according to claim 1, characterized in that it comprises an individual jack (4) for successively tensioning each of the strands (A,B,C,D...) of the cable concerned, means for measuring the tension of the control strand (A) at any moment after its first tightening, means (11) adaptable successively to each of the strands (B,C,D...) other than the control strand in the course of its tensioning and adapted to measure the tension then applied to this strand, means (12) for comparing the tension thus measured with that of the control strand at the same moment, and means (13) for stopping automatically the rise in tension of the strand concerned (B,C,D...) when this comparison shows equality between the two compared tensions.

3. Device according to claim 2, characterized in that the means for measuring the tension applied to the control strand (A) are constituted by a first dynamometric cell (3) engirdling this strand and in that the means for measuring successively the tension applied to each of the other strands are constituted by a second dynamometric cell (11) identical with the first.

4. Device according to claim 3, characterized in that an anchoring block (2) of the different strands of the cable comprises a plurality of frustoconic holes adapted to receive respectively frustoconic anchoring jaws (6,7,8) associated with the different strands and in that there is provided around the control strand (A), at the level of said block, a false frustoconic jaw (18) housed in the corresponding frustoconic hole and traversed freely by said control strand, this false jaw serving as a support successively for the dynamometric cell (3) which surrounds the control strand and for an anchoring jaw (S) of said control strand, itself mounted on said cell.

5. Device according to claim 4, characterized in that said anchoring block (2) is associated with a plate (14) arranged at a short distance from this block, which plate is perforated, on the one hand, by a bore of relatively large diameter (17) adapted to receive and guide the head of the false jaw (18) and, on the other hand, by a plurality of cylindrical bores (15) traversed with slight clearance by the various strands other than the control strand.
